# EUROPEAN PATENT SPECIFICATION

(11) **EP 3 112 031 B1**
(45) Date of publication and mention of the grant of the patent: **26.03.2025**
(21) Application number: 14883753.7
(22) Date of filing: 25.02.2014
(51) Int. Cl.: B04B 1/08, B01D 45/12, B04B 7/02, F01M 13/04, B01D 45/14, B04B 5/12, B04B 5/00

(54) **OIL SEPARATOR**
ÖLABSCHEIDER
SÉPARATEUR D'HUILE

(43) Date of publication of application: 04.01.2017
(73) Proprietor: Tokyo Roki Co., Ltd., Yokohama-shi Kanagawa 224-0041 (JP)
(72) Inventor: ISHIDA, Kosaku, Yokohama-shi Kanagawa 224-0041 (JP); WATANABE, Yoshitaka, Yokohama-shi Kanagawa 224-0041 (JP)
(74) Representative: Marks & Clerk LLP
(86) International application number: PCT/JP2014/054439
(87) International publication number: WO 2015/128928

(56) References cited:
- EP-A2- 2 020 485
- WO-A1-03/037521
- DE-A1- 102010 002 787
- JP-A- 2002 239 414
- JP-A- 2005 270 964
- JP-A- 2005 507 310
- JP-A- 2005 515 065
- JP-A- 2009 167 812
- JP-A- 2013 202 449
- JP-A- H04 247 251
- US-A- 3 234 716
- US-A1- 2013 056 407

## Description

### Technical Field

The present invention relates to an oil separator that separates mist oil contained in target gas from the gas.

### Background Art

There has been known an oil separator that separates mist oil contained in target gas from the gas. For example, an oil separator described in Patent Literature 1 includes a cylindrical stationary housing, a cylindrical stationary casing with a ceiling, and a conical partition with an opening on the top surface. These components define a lower chamber and an upper chamber. The lower chamber includes a centrifugal rotor to clean oil. The upper chamber includes a gas cleaning device to clean gas. A lower end of the stationary housing is coupled to a base. The lower chamber is communicated with an internal space of the tubular base. This tubular base is communicated with a combustion engine. Accordingly, oil after the cleaning is returned to the combustion engine, and gas from a crankcase flows into the tubular base.

An example of such oil separator is disclosed in DE102010002787.

The centrifugal rotor and the gas cleaning device are coupled with a tubular supporting member and are rotatable around a stationary shaft inserted through the supporting member. The centrifugal rotor internally includes a separation chamber. The oil is supplied to this separation chamber through a clearance between the supporting member and the stationary shaft and through an opening open at the supporting member. After the cleaning in the separation chamber, the supplied oil is discharged to a side portion through discharge ports disposed at a bottom surface of the centrifugal rotor. Discharging the oil generates a driving power to rotate the centrifugal rotor and the gas cleaning device.

In this oil separator, gas cleaning device is rotating at a high speed for separating mist oil contained in target gas from the gas. Accompanying with the rotation of gas cleaning device, a turning flow of air is generated in the inner space. The separated oil is carried by the turning flow and moves an inner surface of the upper chamber.

### Citation List

### Patent Literature

Patent Literature 1: Japanese Unexamined Patent Application Publication No. 2005-515065

### Disclosure Of The Invention

### Problems To Be Solved By The Invention

As the gas cleaning device rotates at a higher speed, the speed of the turning flow generated in the inner space increases. The separated oil is moved upward because of the speed increase of the turning flow. Accordingly, there is a possibility that the separated oil is discharged with target gas from the oil separator. This cause a problem that the removal efficiency of the oil contained in target gas decreases.

The present invention has been made under these circumstances, and an object of the present invention is to increase the removal efficiency of the oil contained in target gas.

### Summary Of Invention

To achieve the above-described object, the present invention is oil separator for separating mist oil contained in target gas. The oil separator includes: a plurality of separation disks that are rotatable together with a spindle and that are laminated in an axial direction of the spindle; a nozzle that is projected from a part of a peripheral surface of the spindle, the part being located below with respect to the separation disks, and that injects oil from an injection hole to rotate the spindle around an axis; and a housing that includes a cylindrical side wall, and that defines a chamber accommodating the spindle, the separation disks, and the nozzle, wherein a plurality of longitudinal ribs extending in the vertical direction are circumferentially formed on the inner surface of the side wall.

According to the present invention, the oil moving along the inner surface of the side wall of the upper case is captured by the longitudinal ribs and condenses. Since condensation increases the weight of oil, the condensed oil flows down along the longitudinal ribs against turning flow. This makes it possible to reduce the amount of oil that is carried upward by a turning flow and is discharged with target gas. This can increase the removal efficiency of oil.

In the above-described oil separator, the housing includes a cylindrical guide rib at a position above the separation disks, and the guide rib guides downward fluid that is flowing along the inner surface of the upper case toward a center as viewed from above. In this case, the guide rib can capture the separated oil which has not been captured by the longitudinal ribs. This can further increase the removal efficiency of oil.

In the above-described oil separator, the guide rib includes a guiding nail projecting downward beyond a lower edge of the guide rib, so that the oil that has been captured by the guide rib condenses and become likely to drop. This can further increase the removal efficiency of oil.

In the above-described oil separator, if the guiding nail is composed of a plurality of small pieces disposed with a predetermined clearance from one another, the oil that has been captured by the guide rib can be captured in a clearance between a pair of adjacent small pieces. Accordingly, the oil can easily condense.

In the above-described oil separator, if the small pieces are formed tapered off downward, the force with which the guiding nail holds the oil can be reduced as the oil heads for downward. Accordingly, the oil which has captured and condensed at the guiding nail moves downward due to its own weight, and therefore the oil can be easily release from the guiding nail.

In the above-described oil separator, a projection part of the guiding nail is disposed in a range where wind generated by a rotation of the separation disks flows through. This allows the wind generated in the separation disks to assist the release of the oil from the guiding nail. It is possible to further easily release the oil from the guiding nail.

### Advantageous Effects of Invention

According to the present invention, in an oil separator that separates mist oil contained in target gas from the gas, it is possible to increase the removal efficiency of the oil contained in target gas.

### Brief Description of Drawings

Fig. 1 is a schematic diagram illustrating a closed crankcase ventilation system.
Fig. 2 is a back perspective view of an oil separator as viewed from obliquely above.
Fig. 3 is an exploded perspective view of the oil separator.
Fig. 4 is a cross-sectional view of an upper half portion of the oil separator.
Fig. 5 is a cross-sectional view of the oil separator.
Fig. 6 is a cross-sectional view illustrating the internal structures of an upper case and a lower case.
Fig. 7 is a magnified view of longitudinal ribs disposed in the upper case.
Fig. 8 is a diagram illustrating a guide rib and a guiding nail disposed in the upper case.
Fig. 9 is a diagram illustrating the configuration of the guiding nail.
Fig. 10 is a diagram schematically illustrating the movement of oil by a turning flow.
Fig. 11 is a diagram schematically illustrating capture of oil by the guiding nails and release of oil.

### Detailed Description

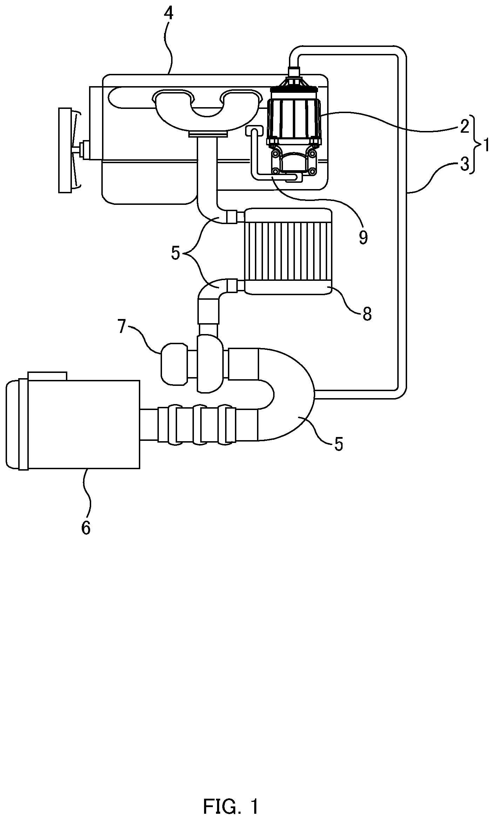

The following describes embodiments of the present invention with reference to the drawings. The following describes with an example of a closed crankcase ventilation system 1 (hereinafter referred to as a ventilation system 1) illustrated in Fig. 1.

As illustrated in Fig. 1, the ventilation system 1 includes an oil separator 2 and a breather pipe 3. The oil separator 2 processes blow-by gas (equivalent to target gas containing mist oil) discharged from an engine 4 to separate the mist oil. This embodiment includes the oil separator 2 at a side surface of an engine 4. The breather pipe 3 constitutes a return flow passage, through which the processed blow-by gas discharged from the oil separator 2 returns to an intake-side flow passage 5 of the engine 4.

In this ventilation system 1, the blow-by gas discharged from the engine 4 flows into to the oil separator 2 disposed at the side surface of the engine 4. The oil separated by the oil separator 2 is returned to the engine 4. On the other hand, the processed blow-by gas is discharged from an upper end portion of the oil separator 2 and then is returned to the intake-side flow passage 5 through the breather pipe 3. Specifically, the processed blow-by gas is returned to a part at which an air filter 6 is coupled to a turbocharger 7 in the intake-side flow passage 5. The returned blow-by gas is mixed with fresh air from the air filter 6 and is compressed by the turbocharger 7. Afterwards, the blow-by gas is cooled by a charge cooler 8 and is supplied to the engine 4.

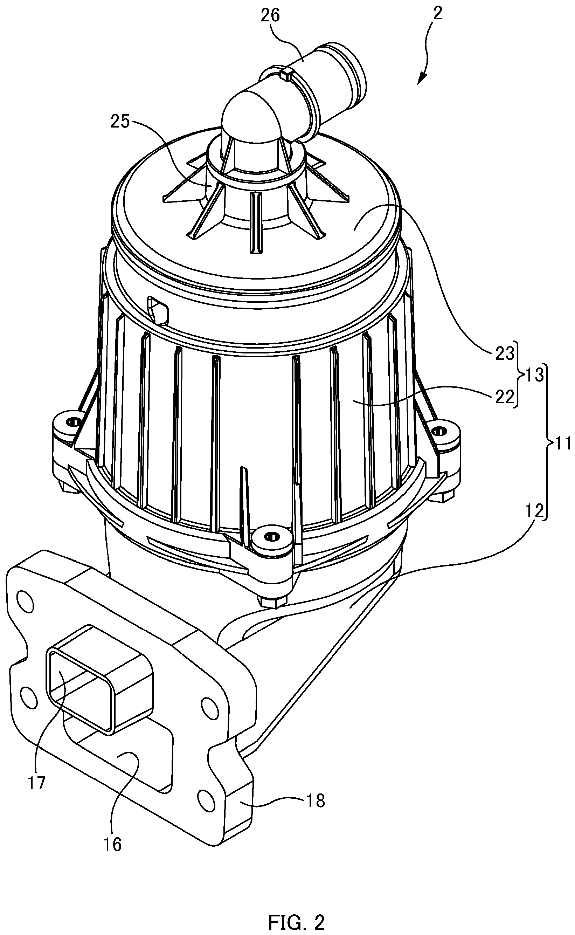

The following describes the oil separator 2. As illustrated in Fig. 2, this oil separator 2 includes a housing 11, which includes a lower case 12 and an upper case 13. The housing 11 houses various components such as a rotor unit and a PCV valve in an internal space (a chamber) (described later).

The lower case 12 is a part that constitutes and separates a lower side part of the housing 11. The lower case 12 is constituted of a box-shaped member having a bottom and an opened top surface. In this embodiment, the lower case 12, the communication tube portion, and the like are manufactured by casting; however, the lower case 12, the communication tube portion, and the like may be manufactured by molding a resin.

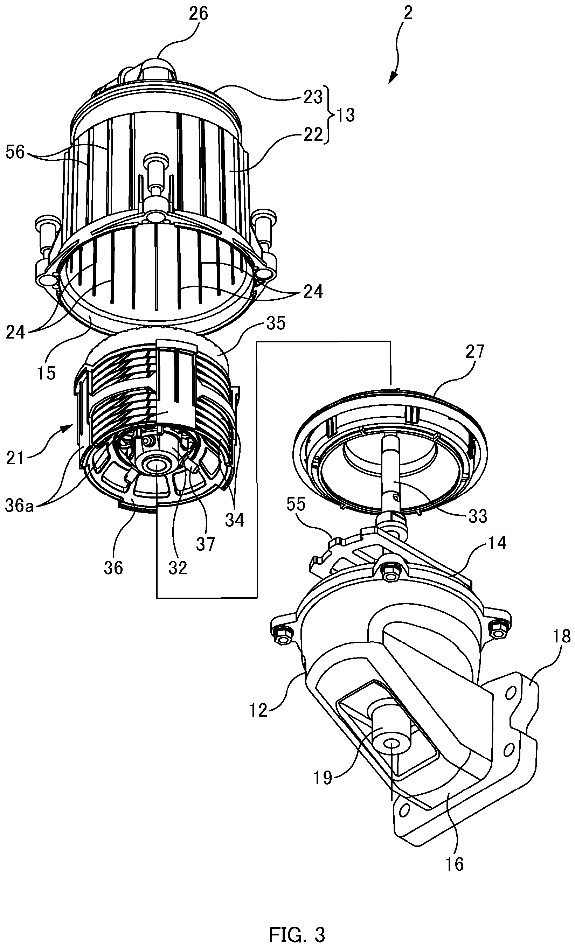

As illustrated in Fig. 3, a circular fitted portion 14 is disposed on an upper end portion of the lower case 12, and is fitted to a lower end portion 15 of the upper case 13. The lower case 12 includes a communication tube portion 16 facing backward on the back surface, and the communication tube portion 16 communicates backward with the engine 4. The communication tube portion 16 includes a flange 18 at its distal end portion, and the flange 18 is joined to the side surface of the engine 4. As shown in Fig. 2, a tubular member 17 is disposed immediately above the communication tube portion 16, and the tubular member 17 is for guiding blow-by gas. The back end of the tubular member 17 projects backward beyond the flange 18.

As shown in Fig. 3, on a bottom surface of the lower case 12, a lower end portion of a joint 19 projects downward. This joint 19 has a cylindrical shape and is coupled to one end of an oil supply pipe 9, which is illustrated in Fig. 1. As will be described later, a part of the joint 19 projects upward inside the lower case 12. The other end of the oil supply pipe 9 is coupled to the side surface of the engine 4. The oil is supplied to the oil supply pipe 9 from an oil passage (not illustrated) disposed inside the engine 4. This oil is used as a power to rotate a rotor unit 21.

As illustrated in Fig. 2, the upper case 13 is a member mounted to the lower case 12 from above. The upper case 13 and the lower case 12 separate a chamber that houses components such as the rotor unit 21. This upper case 13 includes a cylindrical body cover 22 and a disk-shaped top surface cover 23. A plurality of longitudinal ribs 24 are formed at regular intervals in a circumferential direction on an inner surface of the body cover 22. These longitudinal ribs 24 capture the separated oil which is flowing circumferentially along the inner surface of the body cover 22, and the oil condenses and flows down. The longitudinal ribs 24 will be described later.

As illustrated in Fig. 2, the top surface cover 23 is mounted in an airtight manner to the upper end portion of the body cover 22. A tubular gas discharge portion 25 is oriented upward at a center of the top surface cover 23. This gas discharge portion 25 is a part from which the processed blow-by gas is discharged. The breather pipe 3 is coupled to the gas discharge portion 25 via an outlet pipe 26.

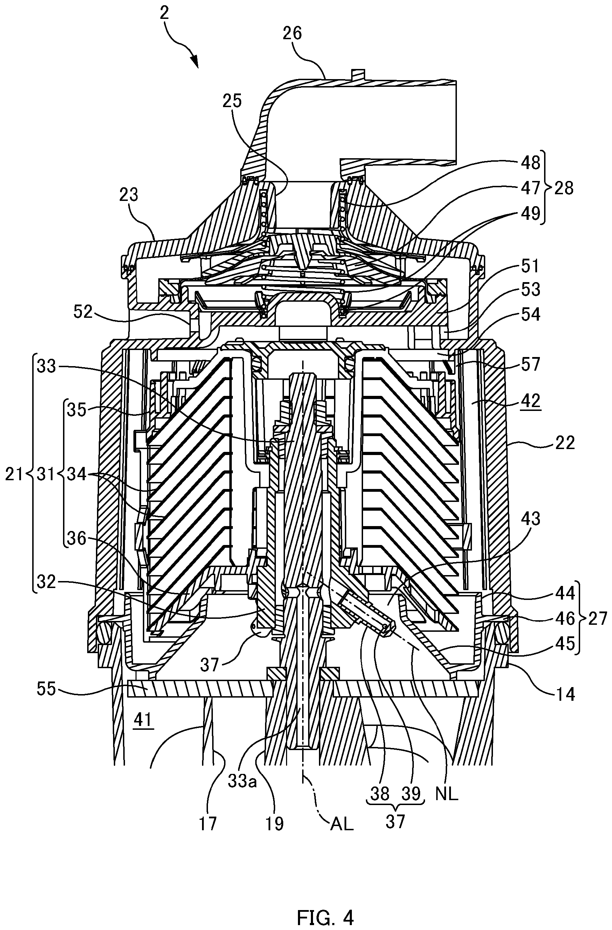

The following describes an internal structure of the oil separator 2. As illustrated in Fig. 3, the oil separator 2 internally includes the rotor unit 21 and a partition member 27. As illustrated in the cross-sectional view in Fig. 4, a PCV valve 28 is mounted to the inside of the top surface cover 23.

First, the following describes the rotor unit 21. This rotor unit 21 is a mechanism to separate the mist oil contained in the blow-by gas. As illustrated in Fig. 4, the rotor unit 21 includes a rotor 31, a spindle 32, and a spindle shaft 33.

The rotor 31 is a part that condenses the mist oil through rotation and separates the mist oil from the blow-by gas. The rotor 31 includes a plurality of separation disks 34, an upper holder 35, and a lower holder 36. The separation disks 34 are ring-shaped plates that incline downward toward the outer peripheral side, in other words, plates having a side surface of a truncated cone shape. The separation disk 34 of this embodiment has a thickness of 1 mm or less, and is manufactured by molding resin. These separation disks 34 are laminated in an axial direction of the spindle 32. For convenience of explanation, the separation disks 34 are illustrated providing intervals from one another; however, the actual intervals are defined to be extremely narrow (for example, less than 1 mm).

The upper holder 35 is a member that holds the plurality of laminated separation disks 34 from above. Similarly, the lower holder 36 is a member that holds the separation disks 34 from below. In the outer peripheral edge of the lower holder 36, a plurality of coupling arms 36a for coupling to the upper holder 35 are disposed (see Fig. 3). In this embodiment, the four coupling arms 36a are provided circumferentially at intervals of 90 degrees. The upper ends of the coupling arms 36a are joined to the upper holder 35 so that the plurality of separation disks 34, the upper holder 35, and the lower holder 36 are integrated to constitute the rotor 31.

This rotor 31 has a cylindrical appearance. On the inner peripheral side of the rotor 31, there is a hollow part, and the hollow part vertically extends through. The spindle 32 is inserted into this hollow part and the spindle 32 and the rotor 31 are joined to one another. Accordingly, the rotor 31 rotates, together with the spindle 32, around the axis of the spindle 32.

Nozzles 37 project from a part of a peripheral surface of the spindle 32 located below the rotor 31. Each of the nozzles 37 is a part from which the oil supplied through the spindle shaft 33 is injected to generate a driving power to rotate the spindle 32 and the rotor 31.

The nozzles 37 of this embodiment include cylindrical nozzle bodies 38 and injection holes 39 disposed at distal end portions of the nozzle bodies 38. Base ends of the nozzle bodies 38 are coupled to the spindle 32, and the distal ends of the nozzle bodies 38 are closed. The nozzle bodies 38 are mounted at an angle of 45 degrees obliquely downward with respect to the axial direction of the spindle 32 indicated by reference symbol AL. The three nozzle bodies 38 are circumferentially disposed at intervals of 120 degrees. The injection hole 39 is disposed on a side surface at the distal end portion of the nozzle body 38. More specifically, the injection hole 39 is disposed in a direction perpendicular to the axial direction of the nozzle body 38 indicated by reference symbol NL so that oil is injected horizontally.

The spindle shaft 33 is a pillar member serving as a bearing of the spindle 32, and supports the spindle 32 in a rotatable manner. As illustrated in Fig. 4, the spindle shaft 33 internally includes an oil supply passage 33a to supply the oil. A lower end portion of the spindle shaft 33 is coupled to an upper end portion of the joint 19, disposed in the lower case 12. As described above, the oil supply pipe 9 is coupled to the joint 19. Accordingly, the oil supplied through the oil supply pipe 9 passes through the joint 19, and then flows into the spindle shaft 33. Thereafter, the oil flows into the nozzle bodies 38, and then is injected from the injection holes 39.

As described above, the injection hole 39 is disposed at the distal end portion of the nozzle body 38 in a direction in which oil is injected horizontally. At the three nozzles 37 disposed at intervals of 120 degrees, formation positions for the injection holes 39 are matched. Accordingly, when the oil is injected from the respective injection holes 39, the rotor 31 and the spindle 32 rotate about the spindle shaft 33 as the axis.

The following describes the partition member 27. As illustrated in Fig. 4, the partition member 27 is a member that partitions the internal space (the chamber) of the housing 11 into a lower chamber 41 (a primary separation chamber) and an upper chamber 42 (a secondary separation chamber). And the partition member 27 forms a communication port 43, and the blow-by gas in the lower chamber 41 is guided by the communication port 43 to the upper chamber 42. The partition member 27 has an outer peripheral portion 44 and a tapered portion 45. The outer peripheral portion 44 is a short cylindrical part and has a collar portion 46 projecting outwardly at the middle in the height direction. The tapered portion 45 is disposed on the inner peripheral side with respect to the outer peripheral portion 44, and has a tapered shape in which the diameter is gradually reduced from the lower end of the outer peripheral portion 44 toward the top. The tapered portion 45 of this embodiment has an inclined surface 45a that inclines at an angle of approximately 45 degrees with respect to the axis of the spindle 32. An upper end opening of the tapered portion 45 forms the communication port 43.

The partition member 27 is fitted to the inner peripheral side of the fitted portion 14 in the lower case 12. The collar portion 46 abuts on an upper end of the fitted portion 14 from above to be positioned. Consequently, the tapered portion 45 is disposed immediately below the lower holder 36 included in the rotor 31. The chamber is partitioned into the lower chamber 41 and the upper chamber 42, which are bordered by the partition member 27. These lower chamber 41 and upper chamber 42 are communicated through the communication port 43. That is, this partition member 27 forms the communication port 43 around the spindle 32 at a height between the nozzles 37 and the separation disks 34, and the communication port 43 guides the blow-by gas in the lower chamber 41 to the upper chamber 42.

When the rotor 31 rotates at a high speed, oil film, which is turning at high speed, is formed on the outer peripheral side with respect to the turning paths of the injection holes 39. When the blow-by gas contacts this oil film, the mist oil contained in the blow-by gas is taken in the oil film and is centrifuged. This makes it possible to reduce the mist oil content in the blow-by gas. Thus, in the lower chamber 41, the mist oil content in the blow-by gas can be reduced by the injection of the oil, which functions as the driving source for the spindle 32 and the rotor 31. Therefore, the lower chamber 41 functions as the primary separation chamber for the mist oil.

The following describes the PCV valve 28. As illustrated in Fig. 4, the PCV valve 28 includes a diaphragm 47, upper springs 48, and lower springs 49.

The diaphragm 47 is a valve element and is manufactured by molding rubber and resin. The diaphragm 47 is composed of a disk-shaped member slightly inclining downward from the center to the peripheral edge portion. The upper springs 48 and the lower springs 49 are members to support the diaphragm 47 in such a manner that the diaphragm 47 can move vertically. That is, the upper springs 48 are disposed at the center of the diaphragm 47 from above, and the lower springs 49 are disposed at the center of the diaphragm 47 from below. The diaphragm 47 is supported in a vertically movable manner by being sandwiched between these upper springs 48 and lower springs 49.

This PCV valve 28 is disposed at the upper portion of the upper case 13. More specifically, the PCV valve 28 is placed on a pedestal portion 51 at a position immediately below the top surface cover 23. The diaphragm 47 covers this pedestal portion 51 in an airtight manner. The lower springs 49 are mounted between the pedestal portion 51 and the diaphragm 47. A space defined by the pedestal portion 51 and the diaphragm 47 is open to open air through an air communicating portion 52. On the other hand, the upper springs 48 are mounted between the top surface cover 23 and the diaphragm 47.

The diaphragm 47 vertically moves according to intake-side pressure of the engine 44 and internal pressure of the crankcase, to adjust the flow of the blow-by gas. That is, under an excessively large intake pressure (negative pressure) of the engine 4, the diaphragm 47 moves toward the gas discharge portion 25 (upward), and under a high pressure of the side close to the crankcase, the diaphragm 47 moves toward the opposite side (downward).

Accordingly, when the pressure in the upper chamber 42 becomes higher than a PCV-set pressure, the diaphragm 47 moves downward to increase a flow rate of the blow-by gas. On the contrary, when the pressure in the upper chamber 42 is lower than the PCV-set pressure, the diaphragm 47 moves upward to reduce the flow rate of the blow-by gas. Thus, the flow rate of the blow-by gas is appropriately adjusted, and thereby the crankcase-side pressure of the engine 4 maintains within a constant range.

An outer periphery of the pedestal portion 51 on which the PCV valve 28 is placed is defined by a sidewall portion, the sidewall portion having a circular shape as viewed from above. A communicating window 53 is disposed at this sidewall portion. Through this communicating window 53, an upper part of the upper chamber 42 with respect to the diaphragm 47 and a part of the upper chamber 42 on the rotor 31 side communicate. A cylindrical rib 54 is disposed at the lower side of the sidewall portion. This cylindrical rib 54 corresponds to the guide rib which guides downwardblow-by gas from the outer peripheral side. The cylindrical rib 54 will be described later with the longitudinal rib 24.

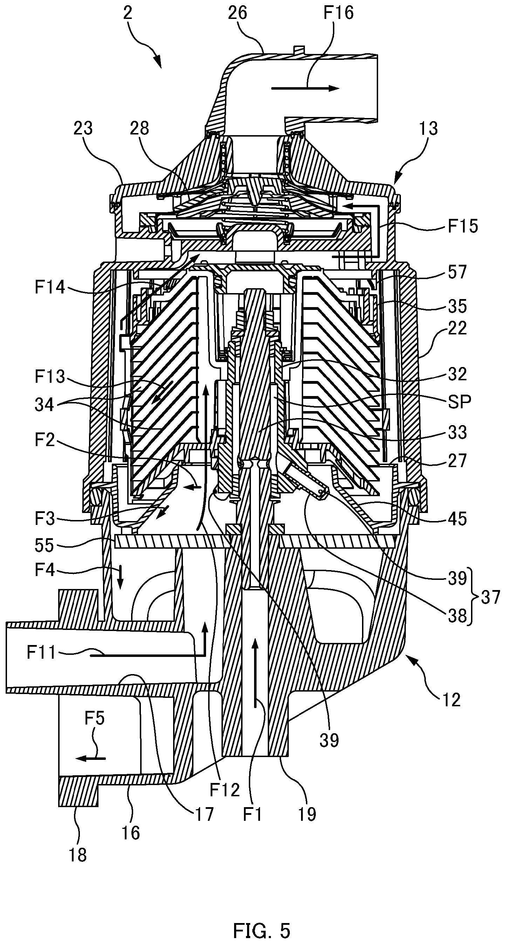

Here, the internal structure of the lower case 12 will be described below. As shown in the cross-sectional view of Fig. 5, in the internal space of the lower case 12, the cylindrical joint 19 projecting upward is provided. A part of the tubular member 17 is disposed along the joint 19. This tubular member 17 is bent into an L shape in the middle, and the remaining part is disposed parallel to the communication tube portion 16. The tubular member 17 is disposed immediately above the communication tube portion 16, and an end portion of the tubular member 17 projects from the flange 18.

An upper end portion of the joint 19 is fitted to a stationary frame 55. This stationary frame 55 is a metallic frame mounted to the fitted portion 14 in the lower case 12 (see Fig. 3). In the tubular member 17, the end portion on the side at which blow-by gas is discharged is disposed near the joint 19 and immediately below the stationary frame 55. Accordingly, the blow-by gas discharged from the tubular member 17 flows upward through the stationary frame 55, and flows into the hollow part of the rotor 31.

Here, the overall operation of the oil separator 2 having the foregoing configuration will be described. As shown in Fig. 5, the oil which has been supplied from the engine 4 to the joint 19 through the oil supply pipe 9 flows into the spindle shaft 33 as indicated by an arrow with reference symbol F1. Afterwards, the oil flows from the spindle shaft 33 to the nozzle bodies 38 and is injected from the injection holes 39 as indicated by an arrow with reference symbol F2. By the injection of the oil from each injection hole 39, the rotor 31 and the spindle 32 rotate around the spindle shaft 33.

The oil which has been injected by the nozzle 37 (the injection holes 39) is sprayed to the tapered portion 45 of the partition member 27. And then, as indicated by an arrow with reference symbol F3, the oil is guided obliquely below toward the outer peripheral side along the inclined surface 45a of the tapered portion 45. As indicated by an arrow with reference symbol F4, the guided oil is collected, together with the oil which has been separated from blow-by gas, in the bottom of the lower chamber 41. Then, the oil is returned to the engine 4 through the communication tube portion 16 as indicated by an arrow with reference symbol F5.

On the other hand, as indicated by an arrow with reference symbol F11, the blow-by gas from the engine 4 is guided by the tubular member 17. Afterwards, as indicated by an arrow with reference symbol F12, the blow-by gas which has been discharged from the tubular member 17 flows into the hollow part of the rotor 31 through an area inside the motion paths of the injection holes 39. As indicated by an arrow with reference symbol F13, the blow-by gas flowing into the hollow part moves through the clearances between the separation disks 34 to the outer peripheral direction of the rotor 31 due to a centrifugal force generated by the rotation of the rotor 31.

When the blow-by gas comes into contact with the separation disks 34, the mist oil contained in this blow-by gas attaches to the surfaces of the separation disks 34. The attached mist oil and additional mist oil coalesce, and thus the oil condenses on the surfaces of the separation disks 34. That is, the oil undergoes secondary separation. Thus, the upper chamber 42 corresponds to the secondary separation chamber in which the secondary separation of the remaining mist oil is performed to separate the remaining mist oil from the blow-by gas which has undergone primary separation of the mist oil.

A clearance SP is formed between the spindle 32 and the spindle shaft 33. This clearance SP serves as an oil guiding passage and is filled with the oil which is supplied to be injected from the nozzles 37. Since the oil supply pressure is sufficiently high, some oil filling the clearance passes through the upper end of the clearance and is discharged from the upper end portion of the spindle 32 to the hollow part of the rotor 31. Similar to the blow-by gas, due to the centrifugal force of the rotor 31, the oil discharged to the hollow part of the rotor 31 moves through the clearances between the separation disks 34 to the outer peripheral direction of the rotor 31.

The oil condensed on the surfaces of the separation disks 34 coalesces with the oil discharged to the hollow part of the rotor 31. The oil which has coalesced is discharged from the outer peripheral edges of the separation disks 34. The oil collides with the inner surface of the body cover 22, and then flows down along this inner surface. And, the oil joins the oil injected from the nozzles 37 in the lower chamber 41 and is returned to the engine 4.

The blow-by gas, which has passed through the rotor 31 and from which the mist oil has been separated, moves upward with turning through the clearance between the inner surface of the upper case 13 and the rotor 31 in the upper chamber 42. It may be considered that the separated oil is carried upward by a turning flow of the blow-by gas. However, as to be described later, the movement of the oil is blocked by the longitudinal ribs 24, which are disposed at the inner surface of the body cover 22, or by the cylindrical rib 54, which are disposed below the pedestal portion 51.

Thus, the blow-by gas from which the mist oil has been separated is introduced to the space on the top surface side of the PCV valve 28, as indicated by arrows with reference symbols F14 and F15. Then, as indicated by an arrow with reference symbol F16, the blow-by gas passes through the outlet pipe 26 and is introduced to the breather pipe 3.

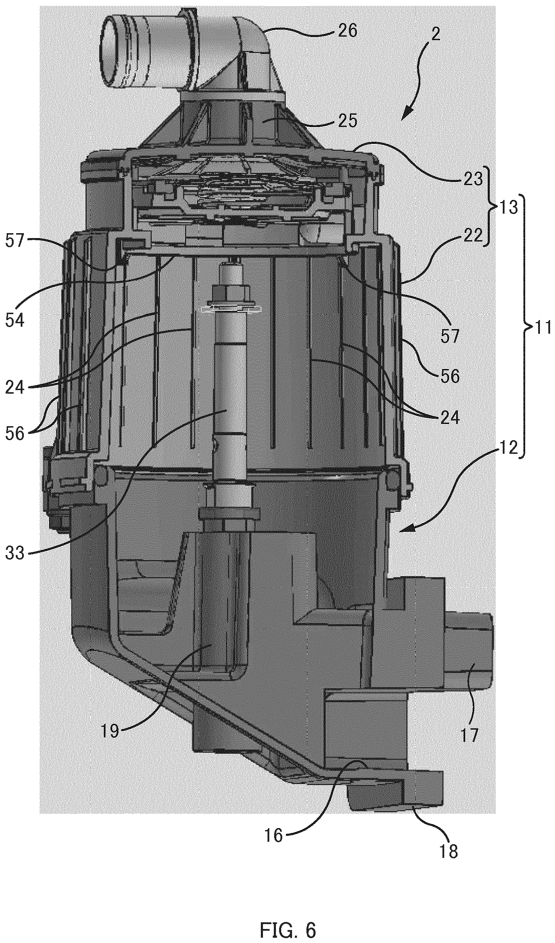

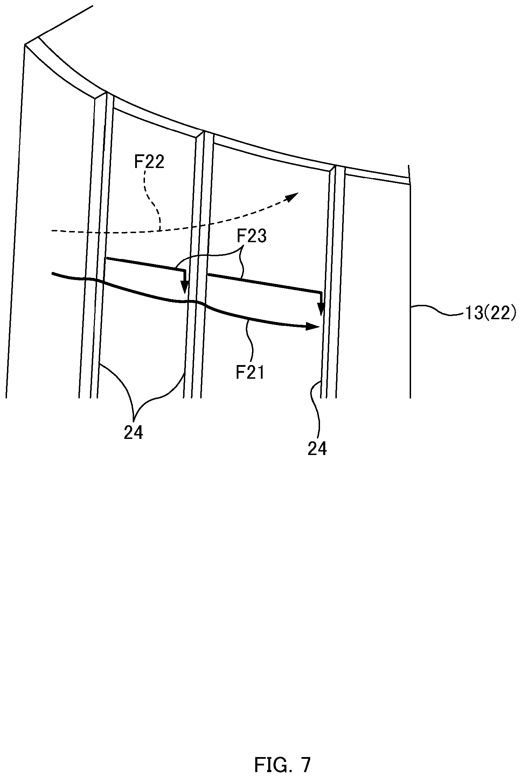

Here, the longitudinal ribs 24 and the cylindrical rib 54 will be described below in detail. First, the longitudinal ribs 24 will be described. Fig. 6 is a cross-sectional view illustrating the internal structures of the upper case 13 and the lower case 12, and the rotor unit 21 and the partition member 27 are omitted from the figure. Fig. 7 is a magnified view of a part of the longitudinal ribs 24.

As illustrated in these figures, the plurality of longitudinal ribs 24 are disposed on the inner surface of the body cover 22 (the cylindrical side wall) constituting the upper case 13 throughout the entire circumference. Each of the longitudinal ribs 24 extends in the vertical direction (the axial direction of the spindle shaft 33). In this embodiment, the height and the width of each longitudinal rib 24 from the inner surface are each 0.8 mm, and the number of the longitudinal ribs 24, which are circumferentially equally spaced, is twenty four. The length of the longitudinal rib 24 is defined identical to or slightly longer than the height of the rotor unit 21.

As described above, these longitudinal ribs 24 capture and condense the separated oil which is circumferentially flowing along the inner surface of the body cover 22 so that the oil flows downward. A high speed rotation of rotor unit 21 generates a highspeed turning flow around the rotor unit 21. For example, a turning flow indicated by an arrow of reference symbol F21 in Fig. 7 is generated. The separated oil is carried by the turning flow and moves on the inner surface of the body cover 22. As the speed of the turning flow increases, the oil is also affected by upward flowing of blow-by gas. Accordingly, the oil moving on the inner surface is subject to buoyancy directing obliquely upward indicated by an arrow of reference symbol F22.

In the present invention, since the plurality of longitudinal ribs 24 are formed on the inner surface of the body cover 22, the movement of the separated oil circumferentially flowing on the inner surface is blocked by the longitudinal ribs 24 and the oil is captured as indicated by an arrow of reference symbol F23. The captured oil coalesces with subsequent oil and condenses. Since condensation increases the weight of oil, the condensed oil flows down along the longitudinal ribs 24 against a turning flow. This makes it possible to reduce the amount of oil that is carried upward by a turning flow and is discharged with blow-by gas. This can increase the removal efficiency of oil.

In the present invention, the height of the longitudinal rib 24 is set to 0.8 mm. However, in experiments, the longitudinal ribs 24 having a height of 0.5 to 1.0 mm enable the separated oil which is circumferentially flowing to flow down. Concerning the number of the longitudinal ribs 24, there is no significant difference of effect in experiments using 48 pieces of longitudinal ribs. Accordingly, it is considered that, if the longitudinal ribs 24 are placed at intervals appropriate to the speed of turning flow, the mixture of oil to blow-by gas can be prevented.

In the present invention, as illustrated in Fig. 6, a plurality of reinforcing ribs 56 are disposed on the outer surface of the body cover 22 through the entire circumference. Accordingly, the reinforcing ribs 56 ensure the necessary strength of the body cover 22. This increases the degree of freedom in design of the longitudinal ribs 24. That is, the longitudinal ribs 24 can be disposed at a height and at intervals appropriate to the speed of turning flow.

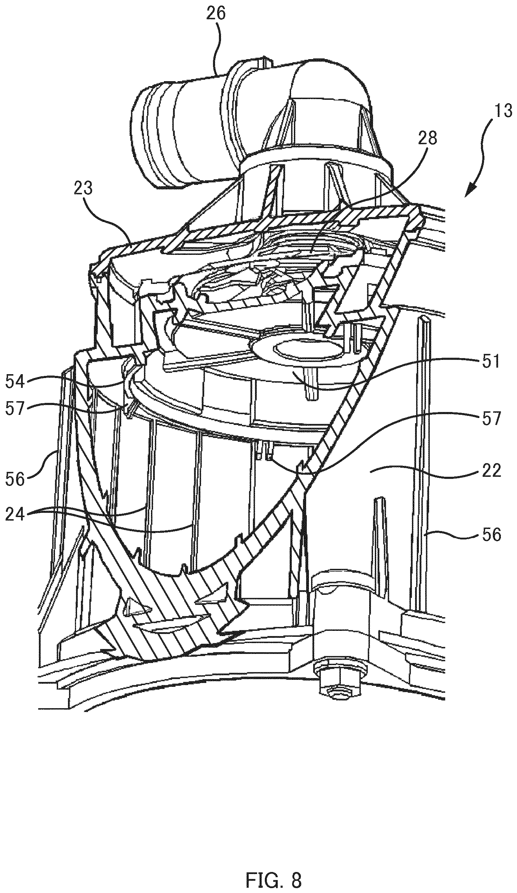

The cylindrical rib 54 (the guide rib) will be described below. As illustrated in a partially-cut cross-sectional view in Fig. 8, the cylindrical rib 54 is a circular ring-shaped protrusion disposed inside the body cover 22 facing downward at a position below the pedestal portion 51, on which the PCV valve 28 is placed. As apparent from the cross-sectional view in Fig. 4, the diameter of the cylindrical rib 54 approximately matches the diameter of the rotor 31. The cylindrical rib 54 and the rotor 31 are concentrically disposed as viewed in the planar direction. A predetermined clearance is defined between a lower edge of the cylindrical rib 54 and an outer peripheral upper edge of the rotor 31.

As illustrated in Fig. 8, the cylindrical rib 54 includes guiding nails 57 projecting downward beyond the lower edge of the cylindrical rib 54. These guiding nails 57 are projections to condense the oil captured at the cylindrical rib 54 and to drop the oil. As illustrated in Fig. 4, a projection length of the guiding nail 57 is defined slightly shorter than the clearance between the cylindrical rib 54 and the rotor 31. The lower ends of the guiding nails 57 are positioned immediately above the outer peripheral upper edge of the rotor 31.

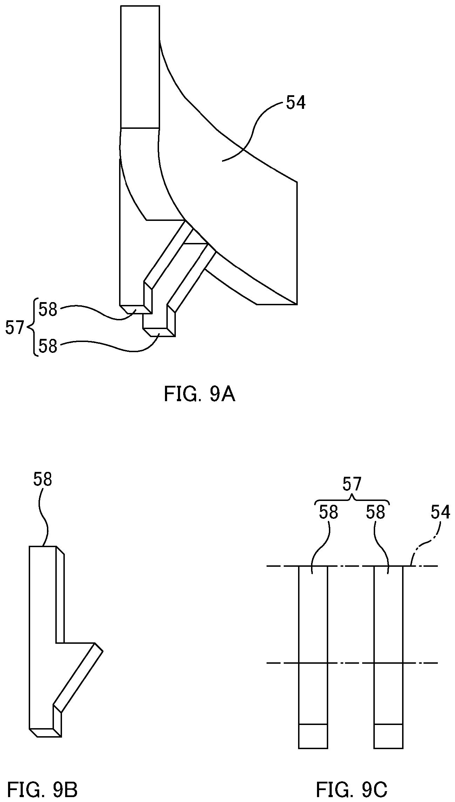

The guiding nails 57 according to the present embodiment are circumferentially disposed at intervals of 60 degrees. That is, six pieces of the guiding nails 57 are disposed in total. As shown in the magnified view of Figs. 9A and 9B, the guiding nails 57 are composed of small pieces 58 each having an arrow shape heading downward; in other words, the small pieces 58 each have a shape whose lower part is tapered off like a wedge. As illustrated in Figs. 9A and 9C, a pair of small pieces 58 are laterally mounted with predetermined intervals. This mounting interval is defined to be a size at which the oil moving along the cylindrical rib 54 can be captured at the clearances between the adjacent small pieces 58. For example, the mounting interval is defined around 1 to 2 mm.

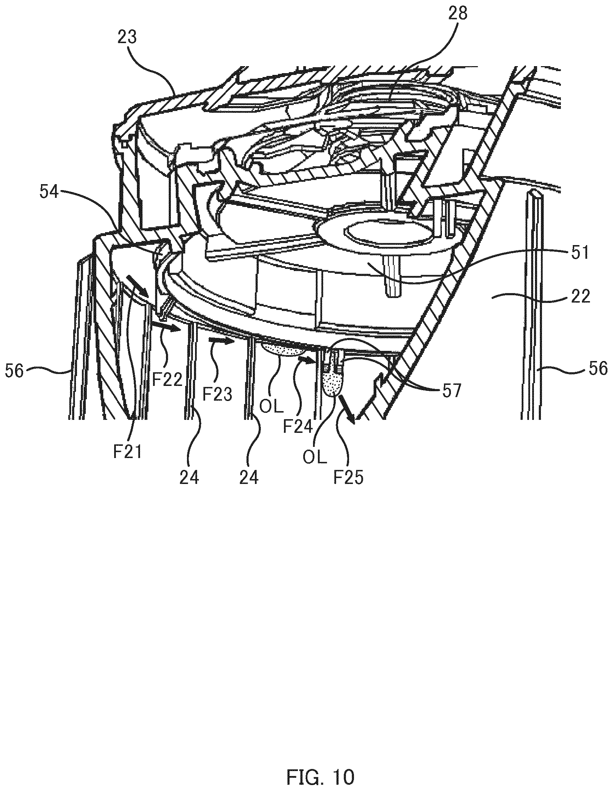

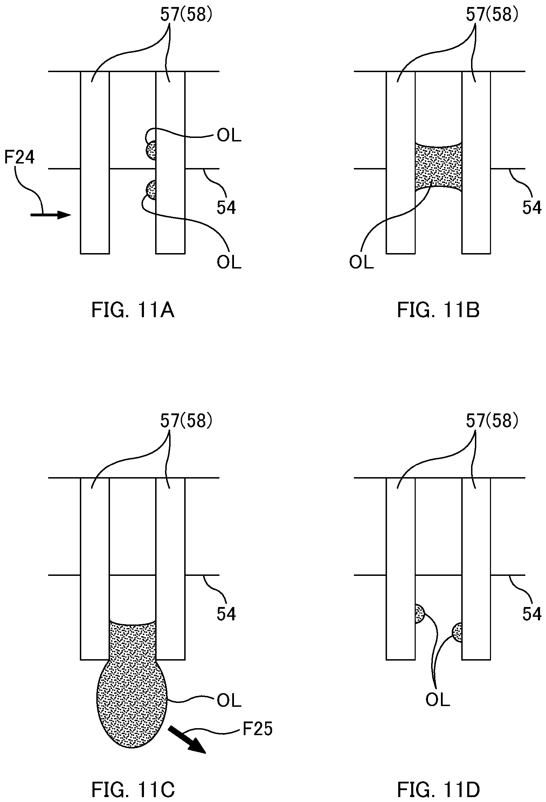

Thus, the cylindrical rib 54 to which the guiding nails 57 are mounted is disposed. Accordingly, the separated oil which has failed to be fully removed by the longitudinal ribs 24 can be reliably captured. This feature will be described below with reference to the schematic diagrams in Figs. 10, 11A to 11D.

For example, as indicated by arrows with reference symbols F21 to F23 in Fig. 10, oil OL that has moved up to the outer surface of the cylindrical rib 54 flows down the outer surface of the cylindrical rib 54, and the oil OL moves to the lower end of the cylindrical rib 54. As illustrated in Figs. 10 and 11A, the oil OL that has moved to the lower end of the cylindrical rib 54 moves along the lower end of the cylindrical rib 54 as indicated by an arrow with reference symbol F24. Then, the oil OL attaches to the surface on a windward side of the small piece 58. As the time elapses, additional oil OL also attaches to the surface of the small piece 58 and coalesces. Accordingly, as illustrated in Fig. 11B, the attached oil OL is held at the clearance formed between the respective small pieces 58 by surface tension.

Afterwards, when additional oil OL further coalesces, the own weight of the oil increases, and the oil OL moves downward as illustrated in Figs. 10 and 11C. As described above, the distal ends of the pair of small pieces 58 constituting the guiding nails 57 are tapered off to the lower end. Accordingly, as the oil OL moves down, a force with which the small pieces 58 hold the oil OL reduces. Consequently, the oil OL becomes likely to release. As indicated by an arrow with reference symbol F25, when the oil OL falls from the guiding nail 57, the clearance formed by the respective small pieces 58 returns to a state where the new droplet of oil OL can be accumulated, as illustrated in Fig. 11D.

As described above, the lower ends of the guiding nails 57 are positioned immediately above the upper end on the outer periphery of the rotor 31. Accordingly, an air current generated by the rotation of the rotor 31 acts on the projection portions of the guiding nails 57 from the cylindrical rib 54. When the oil OL flowing down on the guiding nails 57 receives this air current, the oil OL forms droplets and is blown out the oil OL to the outer periphery direction. Consequently, the separated oil which has been turned into mist is less likely to return to the blow-by gas. This can increase the removal efficiency of oil.

Thus, the oil separator 2 according to the present embodiment includes the cylindrical rib 54. Accordingly, the guide rib can capture the separated oil which has failed to be captured by the longitudinal ribs 24. This can further increase the removal efficiency of oil. Since this cylindrical rib 54 has the guiding nails 57, the oil that has reached the lower end of the cylindrical rib 54 can condense easily.

The guiding nails 57 are composed of the pair of small pieces 58, which are disposed with the predetermined clearances from one another. This allows the clearances between the adjacent small pieces 58 to capture the oil which has been captured by the guide rib. Accordingly, the oil can condense easily. In addition, since these small pieces 58 are formed tapered off downward, the force with which the small pieces 58 hold the oil OL can be reduced as the oil heads for downward. Accordingly, the oil which has captured and condensed at the guiding nails 57 moves downward due to its own weight, and therefore the oil can be easily release from the guiding nails 57.

The projection parts of the guiding nails 57 are disposed in the range where the wind (the turning flow) generated by the rotation of the rotor 31 (the separation disks 34) flows through. This allows the wind generated in the separation disks 34 to assist the release of the oil from the guiding nails 57. It is possible to further easily release the oil from the guiding nails 57.

The description of the above-described embodiment is for ease of understanding of the present invention and does not limit the present invention. The present invention may be modified or improved without departing from the gist and includes the equivalents. For example, the present invention may be configured as follows.

The height and the number of the longitudinal ribs 24 are not limited to the examples of the embodiment. As long as the longitudinal ribs 24 extend in the vertical direction, the longitudinal ribs 24 may not have the linear shape. For example, the longitudinal rib 24 may be a spiral rib which guides obliquely downward the oil that has received the turning flow.

The configuration that the upper case 13 includes the longitudinal ribs 24 is described as the example. However, the lower case 12 may include the longitudinal ribs 24. The housing 11 may have a three-piece configuration composed of an upper portion, an intermediate portion and a lower portion. In this case, the intermediate portion may include the longitudinal ribs 24.

The number of the guiding nails 57 is not limited to six. The number of the small pieces 58, which constitute the guiding nails 57, is not limited to two. The number of the small pieces 58 may be three or more, or also may be one. It is more preferable that the guiding nails 57 is composed of the plurality of small pieces 58, because the oil can be captured in their clearances.

The projection parts of the small pieces 58 may not be tapered off. However, the tapered-off shape according to the foregoing embodiment increases the own weight of the oil. And, the oil moves downward and the holding force by the guiding nails 57 decreases. Consequently, the oil is likely to become droplets and to be released from the guiding nails 57. The lower ends of the guiding nails 57 are disposed immediately above the upper end on the outer periphery of the rotor 31. However, it is sufficient that the lower ends be disposed in a range where the wind from the rotor 31 flows through. This is because the oil is likely to become droplets and to be released in this configuration.

### REFERENCE SIGNS LIST

- 1: crankcase ventilation system, 2 oil separator,
- 3: breather pipe, 4 engine, 5 intake-side flow passage,
- 6: air filter, 7 turbocharger, 8 charge cooler,
- 9: oil supply pipe, 11 housing, 12 lower case, 13 upper case,
- 14: fitted portion in lower case,
- 15: lower end portion in upper case,
- 16: communication tube portion, 17 tubular member, 18 flange,
- 19: joint, 21 rotor unit, 22 body cover,
- 23: disk-shaped top surface cover, 24 longitudinal rib,
- 25: gas discharge portion, 26 outlet pipe, 27 partition member,
- 28: PCV valve, 31 rotor, 32 spindle, 33 spindle shaft,
- 33a: oil supply passage, 34 separation disk,
- 35: upper holder, 36 lower holder, 36a coupling arm,
- 37: nozzle, 38 nozzle body, 39 injection hole,
- 41: lower chamber, 42 upper chamber, 43 communication port,
- 44: outer peripheral portion, 45 tapered portion,
- 45a: inclined surface of tapered portion, 46 collar portion,
- 47: diaphragm, 48 upper spring, 49 lower spring,
- 51: pedestal portion, 52 air communicating portion,
- 53: communicating window, 54 cylindrical rib, 55 stationary frame,
- 56: reinforcing rib, 57 guiding nail, 58 small piece,
- AL: axial direction of spindle, NL axial direction of nozzle body,
- SP: clearance between spindle and spindle shaft, OL oil

## Claims

1. An oil separator for separating mist oil contained in target gas, wherein the oil separator comprises:
a plurality of separation disks (34) that are rotatable together with a spindle and that are laminated in an axial direction of the spindle;
a nozzle (37) that is projected from a part of a peripheral surface of the spindle, the part being located below the separation disks, and that injects oil from an injection hole to rotate the spindle around an axis;
a housing (11) that includes a cylindrical side wall and defining a chamber accommodating the spindle, the separation disks, and the nozzle, **characterized by** the housing including a cylindrical guide rib (54) at a position above the separation disks, and the guide rib guides downward fluid that is flowing along an inner surface of the upper case toward a center as viewed from above, wherein the guide rib includes a guiding nail (57) projecting downward beyond a lower edge of the guide rib; and
a plurality of longitudinal ribs (24) extending in the vertical direction are circumferentially formed on the inner surface of the side wall.

2. The oil separator according to claim 1, wherein
the guiding nail is composed of a plurality of small pieces disposed with a predetermined clearance from one another.

3. The oil separator according to claim 2, wherein
the small pieces are formed tapered off downward.

4. The oil separator according to any one of claims 1 to 3, wherein
a projection part of the guiding nail is disposed in a range where wind generated by a rotation of the separation disks flows through.

## Patentansprüche

1. Ölabscheider zum Abscheiden von in Zielgas enthaltenem Nebelöl, wobei der Ölabscheider Folgendes umfasst:
eine Vielzahl von Trennscheiben (34), die zusammen mit einer Spindel drehbar sind und die in einer axialen Richtung der Spindel geschichtet sind;
eine Düse (37), die aus einem Teil einer Umfangsfläche der Spindel vorspringt, wobei sich der Teil unter den Trennscheiben befindet, und die Öl aus einer Einspritzöffnung einspritzt, um die Spindel um eine Achse zu drehen;
ein Gehäuse (11), das eine zylindrische Seitenwand einschließt und eine Kammer definiert, die die Spindel, die Trennscheiben und die Düse aufnimmt, **dadurch gekennzeichnet, dass**
das Gehäuse eine zylindrische Führungsrippe (54) an einer Position oberhalb der Trennscheiben einschließt, und
die Führungsrippe ein Fluid, das entlang einer Innenfläche des oberen Gehäuses fließt, von oben gesehen nach unten hin zu einem Mittelpunkt leitet, wobei die Führungsrippe einen Führungsnagel (57) einschließt, der nach unten über eine Unterkante der Führungsrippe hinaus vorspringt; und
eine Vielzahl von Längsrippen (24), die sich in der vertikalen Richtung erstrecken, in Umfangsrichtung an der Innenfläche der Seitenwand ausgebildet sind.

2. Ölabscheider nach Anspruch 1, wobei
der Führungsnagel aus einer Vielzahl von kleinen Stücken besteht, die mit einem vorbestimmten Abstand zueinander angeordnet sind.

3. Ölabscheider nach Anspruch 2, wobei
die kleinen Stücke nach unten hin verjüngt ausgebildet sind.

4. Ölabscheider nach einem der Ansprüche 1 bis 3, wobei
ein Vorsprungsteil des Führungsnagels in einem Bereich angeordnet ist, durch den durch eine Drehung der Trennscheiben erzeugter Wind strömt.

## Revendications

1. Séparateur d'huile permettant de séparer un brouillard huileux contenu dans du gaz cible, dans lequel le séparateur d'huile comprend :
une pluralité de disques de séparation (34) qui peuvent tourner avec une broche et qui sont laminés dans une direction axiale de la broche ;
une buse (37) qui fait saillie à partir d'une partie de la surface périphérique de la broche, la partie étant située sous les disques de séparation, et qui injecte de l'huile à partir d'un trou d'injection pour faire tourner la broche autour d'un axe ;
un boîtier (11) incluant une paroi latérale cylindrique et définissant une chambre accueillant la broche, les disques de séparation et la buse, **caractérisé en ce que**
le boîtier inclut une nervure de guidage cylindrique (54) à une position située au-dessus des disques de séparation, et
la nervure de guidage guide vers le bas un fluide qui s'écoule le long d'une surface intérieure du boîtier supérieur vers un centre vu d'en haut, la nervure de guidage incluant un clou de guidage (57) faisant saillie vers le bas au-delà d'un bord inférieur de la nervure de guidage ; et
une pluralité de nervures longitudinales (24) s'étendant dans la direction verticale sont formées circonférentiellement sur la surface intérieure de la paroi latérale.

2. Séparateur d'huile selon la revendication 1, dans lequel
le clou de guidage est composé d'une pluralité de petites pièces disposées à un écart prédéterminé les unes des autres.

3. Séparateur d'huile selon la revendication 2, dans lequel
les petites pièces sont formées de manière effilée vers le bas.

4. Séparateur d'huile selon l'une quelconque des revendications 1 à 3, dans lequel
une partie saillante du clou de guidage est disposée dans une zone où du vent généré par une rotation des disques de séparation s'écoule.
